# EUROPÄISCHE PATENTSCHRIFT

(11) **EP 1 053 178 B1**
(45) Veröffentlichungstag und Bekanntmachung des Hinweises auf die Patenterteilung: **26.05.2004**
(21) Anmeldenummer: 98966194.7
(22) Anmeldetag: 07.12.1998
(51) Int. Cl.: B65B 1/16, B65G 53/08, B65B 1/36

(54) **DOSIERVORRICHTUNG FÜR RIESELFÄHIGES SCHÜTTGUT UND VERFAHREN ZUM BETREIBEN DIESER DOSIERVORRICHTUNG**
METERING DEVICE FOR POURABLE GOODS AND METHOD OF WORKING IT
DOSEUR POUR PRODUIT FLUIDE ET PROCEDE DE MISE EN OEUVRE DE CE DOSEUR

(30) Priorität: 11.02.1998 DE 19805437
(43) Veröffentlichungstag der Anmeldung: 22.11.2000
(73) Patentinhaber: ROBERT BOSCH GMBH, 70442 Stuttgart (DE)
(72) Erfinder: GROSSMANN, Günter, D-70619 Stuttgart (DE); ETTENHOFER, Anton, D-73663 Berglen (DE)
(86) Internationale Anmeldenummer: PCT/DE1998/003578
(87) Internationale Veröffentlichungsnummer: WO 1999/041148

(56) Entgegenhaltungen:
- EP-A- 0 224 621
- EP-A- 0 318 247
- CH-A- 459 059
- US-A- 3 195 786
- US-A- 3 260 285

## Beschreibung

### Stand der Technik

Die Erfindung betrifft eine Dosiervorrichtung für rieselfähiges Schüttgut, wie sie beispielsweise aus der DE 39 15 144 A1 bekanntgeworden ist. Die bekannte, als Schneckendosierer ausgebildete Dosiervorrichtung weist an ihrem Dosierrohrende ein ringförmiges, vorzugsweise aus Sintermetall bestehendes Sperrelement auf, das über eine Leitung mit einer Unterdruckquelle verbunden ist. Nach dem Dosierende wird das Ringelement mit Unterdruck beaufschlagt, wodurch im Durchlaßquerschnitt des Ringelements befindliche Luft abgesaugt wird. Dadurch setzt sich das Dosierrohr im Bereich des Ringelements mit nachlaufendem Füllgut zu, so daß kein Füllgut mehr aus dem Dosierrohr, beispielsweise in einen Verpackungsbehälter, abgegeben wird. Die bekannte Dosiervorrichtung hat den Nachteil, daß sich im Laufe von aufeinanderfolgenden Dosiervorgängen die Poren des gasdurchlässigen Ringelements mit Produktpartikeln zusetzen und somit dessen Funktion beeinträchtigt wird.

Durch das Dokument EP-A-224 621 ist eine Dosiereinrichtung nach dem Oberbegriff des Anspruchs 1 bekannt.

Aufgabe der Erfindung ist es daher, die bekannte Dosiervorrichtung für rieselfähiges Schüttgut derart weiterzubilden daß deren Funktion während einer hohen Anzahl von Dosiervorgängen stets gewährleistet ist. Diese Aufgabe wird mit den kennzeichnenden Merkmalen des Anspruchs 1 gelöst.

Weitere Vorteile und vorteilhafte Weiterbildungen der erfindungsgemäßen Dosiervorrichtung für rieselfähiges Schüttgut ergeben sich aus den Unteransprüchen und der Beschreibung.

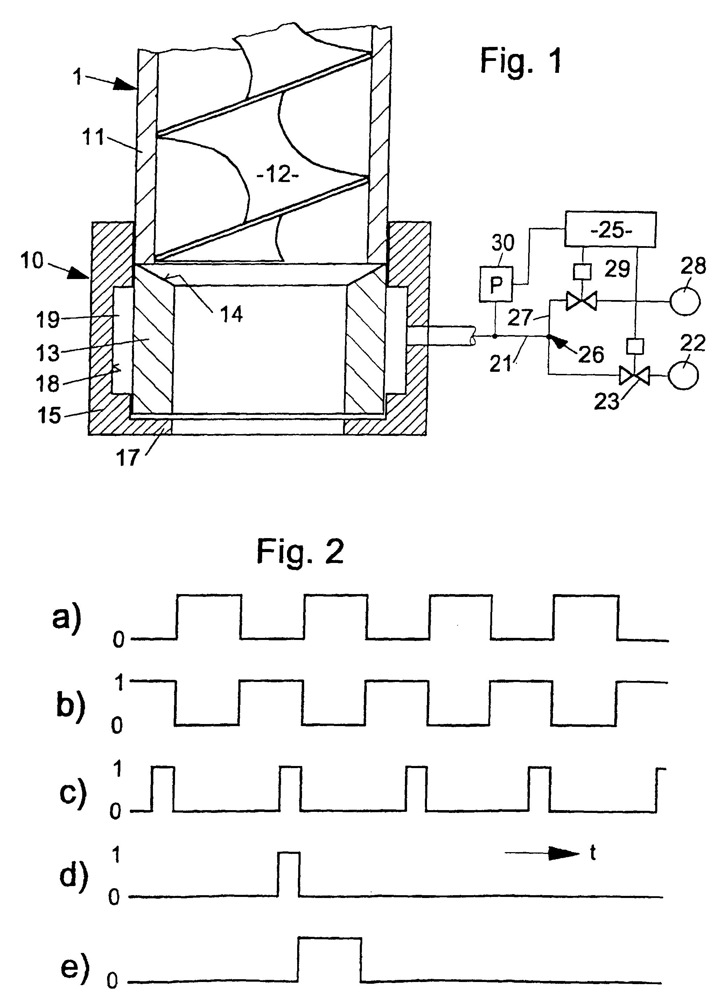

Ein Ausführungsbeispiel der Erfindung ist in der Zeichnung dargestellt und wird im folgenden näher beschrieben. Es zeigen Figur 1 einen Teil einer Dosiervorrichtung teilweise im Längsschnitt und teilweise in schematischer Darstellung und die Figuren 2a bis 2e Ablaufdiagramme verschiedener Funktionen der Dosiervorrichtung in vereinfachter Darstellung über der Zeit.

In der Figur 1 ist das Dosierrohrende 10 eines Schneckendosierers 1 dargestellt, der auf bekannte Art und Weise durch die Drehung einer im Dosierrohr 11 angeordneten Dosierschnecke 12 um einen bestimmten Winkelbetrag rieselförmiges Schüttgut wie Kaffee, Mehl usw. in unter dem Dosierrohrende 10 bereitgestellte Verpackungsbehälter abgibt. Um ein Nachrieseln des Schüttguts nach dem Ende der Drehung der Dosierschnecke 12 zu verhindern, ist unterhalb der Dosierschnecke 12 ein ringförmiges Sperrelement 13 mit dem im wensentlichen vertikal angeordneten Dosierrohr 11 verbunden. Das Sperrelement 13 besteht aus einem gasdurchlässigen Material, bevorzugt aus Sintermetall. Auf der der Dosierschnecke 12 zugewandten Seite hat das Sperrelement 13 an seinem Übergangsbereich zum Dosierrohr 11 innen eine umlaufende Abschrägung 14. Dies hat zur Folge, daß der Innendurchmesser des Sperrelements 13 etwas geringer ist als der Innendurchmesser des Dosierrohrs 11. Das Sperrelement 13 ist mittels eines buchsenförmigen Gehäuses 15 am Dosierrohrende 10 befestigt. Das Gehäuse 15, dessen Innenwandung das Dosierrohrende 10 und zumindest teilweise das Sperrelement 13 an dessen Außenumfang umfaßt, weist an seinem dem Dosierrohrende 10 gegenüberliegenden Ende einen in seinem Innendurchmesser verengten Bereich 17 auf. Der Bereich 17 hat einen Innendurchmesser, der in etwa dem Innendurchmesser des Sperrelements 13 entspricht, wobei die dem Bereich 17 zugewandte Stirnseite des Sperrelements 13 gegen den Bereich 17 anliegt, so daß das Sperrelement 13 vom Bereich 17 axial fixiert ist.

Im mittleren Abschnitt des Gehäuses 15 ist eine umlaufende Ringnut 18 ausgebildet, die eine Kammer 19 bildet, die mittels einer ersten Leitung 21 mit einer Unterdruckquelle 22 verbunden ist. Um die Kammer 19 mit Unterdruck zu beaufschlagen, ist in der ersten Leitung 21 ein erstes Sperrventil 23 angeordnet, das von der Steuereinrichtung 25 des Schneckendosierers 1 ansteuerbar ist. In der ersten Leitung 21 ist vor dem ersten Sperrventil 23 ein Abzweig 26 angeordnet, von dem eine zweite Leitung 27 ausgeht, die mit einer Überdruck- und/oder Schutzgasquelle 28 verbunden ist. Zwischen dem Abzweig 26 und der Überdruck- und/oder Schutzgasquelle 28 ist ein zweites Sperrventil 29 geschaltet, das ebenfalls von der Steuereinrichtung 25 ansteuerbar ist. Zwischen dem Gehäuse 15 und dem Abzweig 26 ist ferner ein Druckmeßgerät 30 in die erste Leitung 21 zwischengeschaltet, dessen Meßwerte der Steuereinrichtung 25 als Eingangswerte zugeführt werden.

Zur Beschreibung der Funktionsweise des erfindungsgemäßen Schneckendosierers 1 wird nunmehr auf die Figuren 2a bis 2e eingegangen.

Figur 2a zeigt den intervallförmigen Betrieb der Dosierschnecke 12 über der Zeit, wobei in den jeweiligen Betriebsphasen jeweils eine bestimmte Menge Schüttgut abgegeben wird. Phasengleich mit den Stillstandsphasen der Dosierschnecke 12 ist das erste Sperrventil 23 jeweils geöffnet (Figur 2b), so daß die Kammer 19 mit Unterdruck beaufschlagt ist. Dies bewirkt auf bekannte Art und Weise, daß die Luft aus dem Durchlaßbereich des Sperrelements 13 für das Schüttgut durch die Poren des Sperrelements 13 abgesaugt wird, so daß sich nachrieselndes Schüttgut an der Innenwandung des Sperrelements 13 ansammelt und nicht mehr aus dem Schneckendosierer 1 fällt. Jeweils am Ende der Stillstandsphasen der Dosierschnecke 12 bzw. am Ende der Phasen, in denen die Unterdruckquelle 22 zur Kammer 19 durchgeschaltet ist, wird der in der ersten Leitung 21 herrschende Unterdruck vom Druckmeßgerät 30 erfaßt und der Steuereinrichtung 25 als Eingangsgröße zugeführt (Figur 2c). In der Steuereinrichtung 25 ist ein Grenzwert für einen Unterdruck abgelegt, der höchstens erreicht werden darf, damit das Sperrelement 13 ordnungsgemäß arbeitet. Da die Poren des Sperrelements 13 auf der der Kammer 19 abgewandten Innenseite je nach Art des Schüttgutes während der Stillstandsphasen der Dosierschnecke 12 mehr oder weniger verstopfen, hat dies früher oder später zur Folge, daß das Sperrelement 13 immer gasundurchlässiger wird, so daß der Unterdruck nicht mehr auf nachrieselndes Schüttgut einwirken kann. Dieses Zusetzen der Poren des Sperrelements 13 bewirkt, daß in der ersten Leitung 21 nach und nach ein größerer Unterdruck gemessen wird. In der Figur 2d ist dargestellt, daß während einer Messung des Unterdrucks der in der Steuereinrichtung 25 abgelegte Grenzwert erreicht ist. Dies hat zur Folge, daß entsprechend Figur 2e in der nachfolgenden Betriebsphase der Dosierschnecke 12 das zweite Sperrventil 29 von der Steuereinrichtung 25 geöffnet wird, so daß Überdruck über die beiden Leitungen 21, 27 auf die Kammer 19 geleitet wird. Der Überdruck bewirkt, daß in den Poren des Sperrelements 13 haftende Schüttgutteilchen herausgelöst und zusammen mit dem gerade dosierenden Schüttgut abgegeben werden.

Die oben beschriebene Funktionsweise des Schneckendosierers 1 läßt sich in vielfältiger Weise abändern. So ist es beispielsweise denkbar, das Reinigen des Sperrelements 13 nicht nur während einer einzigen Dcsierphase, sondern während einigen nachfolgenden Dosierphasen stattfinden zu lassen. Um den vorrichtungstechnischen Aufwand des Schneckendosierers 1 zu reduzieren ist es weiterhin denkbar, auf das Druckmeßgerät 30 zu verzichten. In diesem Fall kann der Druckluftstoß entweder bei jeder Dosierphase des Schneckendosierers 1, oder aber nach einer vom Schüttgut abhängigen bestimmten Anzahl von Dosierphasen erfolgen.

Die Reinigung des Sperrelements 13 mittels Überdruck hat den Vorteil, daß anstatt Druckluft auch ein unter Druck stehendes Schutzgas verwendet werden kann. Diese Variante wird insbesondere bei zum Verderben neigenden, sauerstoffempfindlichen Schüttgütern wie Kaffee angewandt.

Anstelle einer pneumatisch wirkenden Reinigung des Sperrelements 13 ist auch eine mechanische Reinigung denkbar. Diese umfaßt dann eine mit dem Sperrelement 13 gekoppelte Vibrationseinrichtung, die gemäß obiger Beispiele entweder über die von dem Druckmeßgerät 30 erfaßten Meßwerte, oder nach jeweils einer bestimmten Anzahl von Dosiervorgängen angesteuert wird. Auch die Vibrationseinrichtung bewirkt, daß in den Poren des Sperrelements 13 anhaftende Schüttgutpartikel losgelöst werden, so daß der ordnungsgemäße Betrieb des Schnekkendosierers 1 gewährleistet ist.

Bei den obigen Ausführungsbeispielen ist die Dosiervorrichtung als Schneckendosierer 1 ausgebildet. Die Problematik nachrieselnden Schüttguts ist jedoch auch bei anderen Dosiervorrichtungen, wie beispielsweise Kammerdosierern bekannt, so daß der erfindungsgemäße Reinigungsmechanismus auch auf derartige Dosierer anwendbar ist, bei denen ähnliche Sperrelemente eingesetzt sind.

## Patentansprüche

1. Dosiervorrichtung (1) für rieselfähiges Schüttgut, mit einem im wesentlichen vertikal angeordneten Dosierrohr (11) und einer am Dosierrohrende (10) angeordneten Ventileinrichtung für das Schüttgut, die aus einem einen Durchlaßquerschnitt freilassenden, gasdurchlässigen Ringelement (13) besteht, das wechselweise mit einer Unterdruckquelle (22) oder einer Überdruckquelle (28) verbindbar ist, die beide mit einer Steuereinrichtung (25) gekoppelt sind, **dadurch gekennzeichnet, daß** innerhalb des Dosierrohres (11) eine Abgabeeinrichtung (12) für das Schüttgut angeordnet ist und daß in eine das Ringelement (13) mit der Unterdruckquelle (22) und der Überdruckquelle (28) verbindende Leitung (21) ein Druckmeßgerät (30) geschaltet ist, das mit der Steuereinrichtung (25) verbunden ist und dessen Meßwert zur Ansteuerung der Überdruckquelle (28) dient.

2. Vorrichtung nach Anspruch 1, **dadurch gekennzeichnet, daß** die Abgabeeinrichtung für das Schüttgut als Dosierschnecke (12) ausgebildet ist.

3. Verfahren zum Betreiben einer Dosiereinrichtung (1) für rieselfähiges Schüttgut, die ein im wesentlichen vertikal angeordnetes Dosierrohr (11) mit einer darin angeordneten Abgabeeinrichtung (12) für das Schüttgut aufweist, an dessen Dosierrohrende (10) sich eine Ventileinrichtung in Form eines einen Durchlaßquerschnitt für das Schüttgut freilassenden, gasdurchlässigen Ringelements (13) anschließt, das wechselweise mit einer Unterdruckquelle (22) oder einer Überdruckquelle (28) verbindbar ist, die beide von einer Steuereinrichtung (25) angesteuert werden, wobei zum Sperren der Ventileinrichtung das Ringelement (13) mit der Unterdruckquelle (22) verbunden wird, **dadurch gekennzeichnet, daß** in einer Leitung (21), die die Unterdruckquelle (22) mit dem Ringelement (13) verbindet während des Betreibens der Unterdruckquelle (22) der Unterdruck gemessen wird, der der Steuereinrichtung (25) als Eingangsgröße zugefuhrt wird und daß beim Unterschreiten eines Grenzwertes zum Entfernen von Schüttgutpartikeln, die sich aufgrund der Beaufschlagung des Ringelements (13) mit Unterdruck in dessen Poren ansammeln die Steuereinrichtung (25) während wenigstens einer nachfolgenden Dosierphase die Überdruckquelle (28) ansteuert.

## Claims

1. Metering device (1) for pourable bulk material, with an essentially vertically arranged metering tube (11) and with a valve means for the bulk material, the said valve means being arranged at the metering-tube end (10) and consisting of a gas-permeable annular element (13) which leaves free a passage cross section and which is connectable alternately to a vacuum source (22) or an excess-pressure source (28) which are both coupled to a control means (25), **characterized in that** a discharge means (12) for the bulk material is arranged within the metering tube (11), and **in that** inserted into a line (21) connecting the annular element (13) to the vacuum source (22) and to the excess-pressure source (28) is a pressure-measuring instrument (30) which is connected to the control means (25) and the measurement value of which serves for activating the excess-pressure source (28).

2. Device according to Claim 1, **characterized in that** the discharge means for the bulk material is designed as a metering worm (12).

3. Method for operating a metering device (1) for pourable bulk material, which has an essentially vertically arranged metering tube (11) with, arranged therein, a discharge means (12) for the bulk material, the metering-tube end (10) of the said metering tube being followed by a valve means in the form of a gas-permeable annular element (13) which leaves free a passage cross section for the bulk material and which is connectable alternately to a vacuum source (22) or an excess-pressure source (28) which are both activated by a control means (25), the annular element (13) being connected to the vacuum source (22) in order to block the valve means, **characterized in that**, during the operation of the vacuum source (22), the vacuum is measured in a line (21) connecting the vacuum source (22) to the annular element (13), the said vacuum being supplied as an input variable to the control means (25), and **in that**, in the event of the undershooting of a limit value for the removal of bulk material particles which accumulate in the pores of the annular element (13) by the latter being acted upon by a vacuum, the control means (25) activates the excess-pressure source (28) during at least one subsequent metering phase.

## Revendications

1. Dispositif (1) de dosage pour produit en vrac pouvant s'écouler, comportant un tuyau (11) de dosage disposé essentiellement verticalement et un dispositif de soupape pour le produit en vrac disposé à l'extrémité (10) du tuyau de dosage, constitué d'un élément annulaire (13) libérant une section de passage, perméable aux gaz, qui, tour à tour, peut être relié avec une source de dépression (22) ou une source de surpression (28), toutes deux couplées avec un dispositif de commande (25),
**caractérisé en ce qu'**
un dispositif de distribution (12) du produit en vrac est disposé à l'intérieur du tuyau de dosage (11) et, dans une conduite (21) reliant l'élément annulaire (13) avec la source de dépression (22) et la source de surpression (20), un appareil de mesure de pression (30) est raccordé au dispositif de commande (25) et dont la valeur mesurée sert au pilotage de la source de surpression (28).

2. Dispositif selon la revendication 1,
**caractérisé en ce que**
le dispositif de distribution du produit en vrac est constitué en tant que vis sans fin de dosage (12).

3. Procédé d'exploitation d'un dispositif de dosage (1) pour produit en vrac pouvant s'écouler, présentant un tuyau de dosage (11) disposé essentiellement verticalement à l'intérieur duquel est disposé un dispositif de distribution (12) du produit en vrac, à l'extrémité (10) de tuyau de dosage duquel se raccorde un dispositif de soupape sous la forme d'un élément annulaire (13), perméable aux gaz, libérant une section de passage pour le produit en vrac et qui est relié en alternance avec une source de dépression (22) ou une source de surpression (28) toutes deux commandées par un dispositif de commande (25), l'élément annulaire (13) étant relié à la source de dépression (22) pour bloquer le dispositif de soupape,
**caractérisé en ce que**
dans une conduite (21) reliant l'élément annulaire (13) à la source de dépression (22), on mesure pendant le fonctionnement de la source de dépression (22), la dépression fournie comme grandeur d'entrée au dispositif de commande (25), et lors d'un dépassement en-dessous d'une valeur limite, afin de séparer des particules en vrac accumulées dans les pores de l'élément annulaire (13) du fait de sa mise en dépression, le dispositif de commande (25) enclenche la source de surpression (28) pendant au moins une phase de dosage suivante.
